# EUROPÄISCHE PATENTANMELDUNG

(11) **EP 2 206 630 A1**
(43) Veröffentlichungstag der Anmeldung: **14.07.2010**
(21) Anmeldenummer: 10000091.8
(22) Anmeldetag: 08.01.2010
(51) Int. Cl.: B60R 13/10

(54) **Kennzeichenhalter**

(30) Priorität: 12.01.2009 AT 362009
(71) Anmelder: Putz, Lisa-Maria, 4400 Steyr (AT)
(72) Erfinder: Putz, Lisa-Maria, 4400 Steyr (AT)
(74) Vertreter: Krause, Peter

(57) **Zusammenfassung**

Die Erfindung betrifft eine Kennzeichentafel-Halterung (1), die zur Aufnahme einer, vorzugsweise temporär anbringbaren, Kennzeichentafel (2) für ein Kraftfahrzeug, insbesondere für ein Wechselkennzeichen, dient. Die Kennzeichentafel-Halterung (1) besteht aus einer die Unterseite der Kennzeichentafel (2) abstützenden, vorzugsweise Durchbrechungen (7) aufweisenden, Unterlagsplatte (3), die am Rand einen in Richtung der Kennzeichentafel (2) gerichteten Steg (4) aufweist. Der Steg (4) weist an mindestens einer Seite der Kennzeichentafel-Halterung (1) mindestens eine, wenigstens einen Teil der Oberseite des Kennzeichentafelrandes umgreifende, Lasche (5) auf und/oder ist im Steg (4), vorzugsweise an der der Lasche (5) gegenüberliegenden Seite der Kennzeichentafel-Halterung (1), mindestens eine Durchbrechung für einen Schiebe-Haken-Verschluss (6) vorgesehen. Es ist eine weitere, zweite, vorzugsweise gleich ausgeführte, Kennzeichentafel-Halterung (8) vorgesehen, die zur Aufnahme und Anordnung einer Metallplatte (9), vorzugsweise gleicher Größe einer Kennzeichentafel (2), vorgesehen ist. Diese zweite Kennzeichentafel-Halterung (8) ist am Fahrzeug befestigt. An der Unterlagsplatte (3) der ersten Kennzeichentafel-Halterung (1) ist mindestens ein Magnet (10) angeordnet. Die erste Kennzeichentafel-Halterung (1) ist mit der Kennzeichentafel (2) mittels des Magneten bzw. der Magneten (10) mit der zweiten, am Fahrzeug befestigten, Kennzeichentafel-Halterung (8) verbunden.

## Beschreibung

Die Erfindung betrifft eine Kennzeichentafel-Halterung, die zur Aufnahme einer, vorzugsweise temporär anbringbaren, Kennzeichentafel für ein Kraftfahrzeug, insbesondere für ein Wechselkennzeichen, dient, wobei die Kennzeichentafel-Halterung aus einer die Unterseite der Kennzeichentafel abstützenden, vorzugsweise Durchbrechungen aufweisenden, Unterlagsplatte besteht, die am Rand einen in Richtung der Kennzeichentafel gerichteten Steg aufweist und der Steg an mindestens einer Seite der Kennzeichentafel-Halterung mindestens eine, wenigstens einen Teil der Oberseite des Kennzeichentafelrandes umgreifende, Lasche aufweist und/oder im Steg, vorzugsweise an der der Lasche gegenüberliegenden Seite der Kennzeichentafel-Halterung, mindestens eine Durchbrechung für einen Schiebe-Haken-Verschluss vorgesehen ist.

Es sind verschiedene Vorrichtungen zur Befestigung von Tafeln, insbesondere Kennzeichentafeln, an einer Unterlage, vorzugsweise einem Kraftfahrzeug, bekannt.

So ist aus der AT 10 210 U1 eine oben zitierte Kennzeichentafel-Halterung bekannt.

Weiters ist aus der AT 380 842 B eine derartige Vorrichtung zur Befestigung einer Kennzeichentafel an einem Kraftfahrzeug bekannt. Die Vorrichtung umfasst eine die Tafel abstützende Unterlagsplatte mit einem die Tafel umfassenden Rahmen. Der Rahmen ist mit der Unterlagsplatte entlang einer Rahmenseite schwenkbar, jedoch untrennbar und an einer dieser Rahmenseite gegenüber liegenden Rahmenseite lösbar verbunden.

Aus der AT 000 382 U1 ist es bekannt, dass eine Vorrichtung zur Befestigung einer Kennzeichentafel an einem Kraftfahrzeug aus einer Unterlagsplatte und aus einem mit dieser Unterlagsplatte um eine Schwenkachse schwenkbar verbundenen Rahmen besteht. Der Rahmen übergreift in seiner Schließstellung die Kennzeichentafel auf wenigstens einem Teil ihres Randes.

Ferner ist aus der AT 390 412 B eine Vorrichtung zur Befestigung einer Kennzeichentafel an einem Kraftfahrzeug bekannt, die eine die Kennzeichentafel abstützende Unterlagsplatte und eine die Kennzeichentafel umfassenden, zumindest die Vorderseite der Unterlagsplatte abdeckenden Rahmen aufweist. Die Unterlagsplatte ist mit dem Rahmen entlang einer Längsseite schwenkbar verbunden.

Nachteilig bei derart schwenkbaren Rahmen sind die aufwendigen Herstell- und Montageschritte für die Schwenklagerung. Ferner ist für die Schwenklagerung eine Lagerhaltung für viele Einzelteile notwendig.

Weiters ist aus der AT 409 840 B eine Halterung für eine Kennzeichentafel bekannt, die eine die Unterseite der Kennzeichentafel abstützende Unterlagsplatte und einen mit dieser Unterlagsplatte über einen Steg verbundenen Rahmen, der den Rand der Kennzeichentafel an der Oberseite übergreift, aufweist. An einer Seite der Halterung ist der Rahmen so ausgebildet, dass eine Öffnung zum Einführen der Tafel in den Zwischenraum zwischen der Unterlagsplatte und dem Rahmen möglich ist. Auch hier ist der Nachteil gegeben, dass die Fertigung dieser Vorrichtung äußerst aufwendig ist.

Eine weitere Halterung für eine an einem Kraftfahrzeug zu befestigende Kennzeichentafel ist aus der AT 004 940 U1 bekannt. Diese Halterung weist eine Leiste mit einer Vertiefung auf, welche mit Beschriftungen, Logos, Abbildungen o. dgl. versehen ist. Nachteilig dabei ist, dass wieder mehrere Montageschritte zur Komplettierung der Vorrichtung notwendig sind.

Ein genereller Nachteil aller obigen im Spritzgussverfahren hergestellten Vorrichtungen ist darin zu sehen, dass diese durch das Herstellverfahren hart und spröde sind, insbesondere bei mehrteiligen Ausführungen. Da viele Stoßstangen von Kraftfahrzeugen nicht plan bzw. gerade sind, ist eine entsprechende Lagerhaltung für die eventuellen Frontkrümmungen der Stoßstangen Bedingung für ein marktgerechtes Anbot.

Es sind auch bereits Dekor-Rahmen für Kennzeichentafel-Halterungen, beispielsweise aus der WO 2005/012041 A1 oder der US 2002152653 A1 bzw. der US 5 638 623 A bekannt. Nachteilig bei diesen Dekor-Rahmen ist deren Mehrteiligkeit, wodurch eine aufwendige und unwirtschaftliche Herstellung gegeben ist. Ein weiterer Dekor-Rahmen ist aus der FR 2 764 569 A1 bekannt.

Aufgabe der Erfindung ist es eine Kennzeichentafel-Halterung der eingangs erwähnten Art zu schaffen, die einerseits die oben aufgezeigten Nachteile vermeidet und die anderseits stabil und formschön ist und den Vorschriften für die Befestigung entspricht.

Die Aufgabe wird durch die Erfindung gelöst.

Die erfindungsgemäße Kennzeichentafel-Halterung ist dadurch gekennzeichnet, dass eine weitere, zweite, vorzugsweise gleich ausgeführte, Kennzeichentafel-Halterung vorgesehen ist, die zur Aufnahme und Anordnung einer Metallplatte, vorzugsweise gleicher Größe einer Kennzeichentafel, vorgesehen ist, wobei diese zweite Kennzeichentafel-Halterung am Fahrzeug befestigt ist und dass an der Unterlagsplatte der ersten Kennzeichentafel-Halterung mindestens ein Magnet angeordnet ist und dass die erste Kennzeichentafel-Halterung mit der Kennzeichentafel mittels des Magneten bzw. der Magneten mit der zweiten, am Fahrzeug befestigten, Kennzeichentafel-Halterung (8) verbunden ist. Mit der Erfindung ist es erstmals möglich, den Benutzern von Wechselkennzeichen, sei es für den individuellen Gebrauch oder für Händler o. dgl., bei der Handhabung bzw. Montage der Wechselkennzeichentafeln in Punkto Schnelligkeit zum Anbringen, wie auch in Sachen Bequemlichkeit sehr weit entgegenzukommen.

Durch die Fixierung mit einem oder mehreren Magneten, insbesondere Permanentmagneten, der Kennzeichentafel-Halterung mit der Kennzeichentafel in der Kennzeichentafel-Halterung, die am Fahrzeug montiert ist und die Metallplatte aufweist, ist ein rasches und schmutzfreies Anbringen und Abnehmen gewährleistet.

Ein weiterer Vorteil dieses Wechselkennzeichensystems ergibt sich für den Handel bzw. für die Werkstätten der Fahrzeugbranche. So ist es möglich die Metallplatte, die in der am Fahrzeug montierten Kennzeichentafel-Halterung angeordnet ist, mit dem Firmennamen oder anderen Werbeinformationen zu versehen.

Für Autohalter mit Wechselkennzeichen ergibt sich noch ein weiterer Vorteil, nämlich dass auf die Metallplatte das Kennzeichen notiert ist. Damit ist es für die Überwachungsorgane bzw. für die Polizei in einfachster Weise überprüfbar, ob das Fahrzeug auch die rechtlichen Voraussetzungen, wie Versicherungsschutz usw., erfüllt.

Nach einer Ausgestaltung der Erfindung ist der Magnet bzw. sind die Magneten in der für die Aufnahme der Kennzeichentafel vorgesehenen ersten Kennzeichentafel-Halterung an der der Kennzeichentafel zugewandten Seite der Unterlagsplatte angeordnet. Dadurch ist ein Schutz der Magneten durch Abstreifen oder ähnliches gegeben.

Gemäß einer alternativen Ausgestaltung der Erfindung ist der Magnet bzw. sind die Magneten an der für die Aufnahme der Kennzeichentafel vorgesehenen ersten Kennzeichentafel-Halterung an der der Kennzeichentafel abgewandten Seite der Unterlagsplatte angeordnet. Natürlich ist auch diese Ausführung möglich. Der Vorteil dieser Ausführung ist darin zu sehen, dass der Magnet in seiner Wirkungsweise direkt auf der Metallplatte aufliegt.

Nach einem weiteren besonderen Merkmal der Erfindung sind zur ineinander Stapelbarkeit der beiden Kennzeichentafel-Halterungen im Stegbereich die Außenabmessungen Länge und Breite der Unterlagsplatte kleiner als die Innenabmessungen des für die Kennzeichentafel aufnehmenden Raumes. Durch diese konstruktive Ausgestaltung der Erfindung ist eine betriebsmäßige, sichere Montage der beiden Kennzeichentafel-Halterungen möglich. Durch die ineinander Stapelbarkeit ist ein verrutschen nicht möglich. Darüber hinaus ist auch der visuelle Eindruck nur von einer Kennzeichentafel-Halterung für einen außen stehenden Betrachter gegeben, da die beiden Kennzeichentafel-Halterungen bündig abschließen.

Gemäß einer weiteren Ausgestaltung der Erfindung bilden Stegflächen eine Umrandung der Kennzeichentafel. Abgesehen von dem optisch schöneren Eindruck, könnten auch an dieser Stelle Werbeinformationen aufgedruckt werden.

Die Erfindung wird im nachfolgenden anhand der in den Zeichnungen dargestellten Ausführungsbeispiele näher erläutert.

### Es zeigen:

Fig. 1 eine - explosionsartige Darstellung - eines Wechselkennzeichen - Befestigungssystems,
Fig. 2 einen Schnitt A-A in Fig. 1 in explosionsartiger Darstellung und
Fig. 3 das form- und kraftschlüssig verbundene Wechselkennzeichen - Befestigungssystem

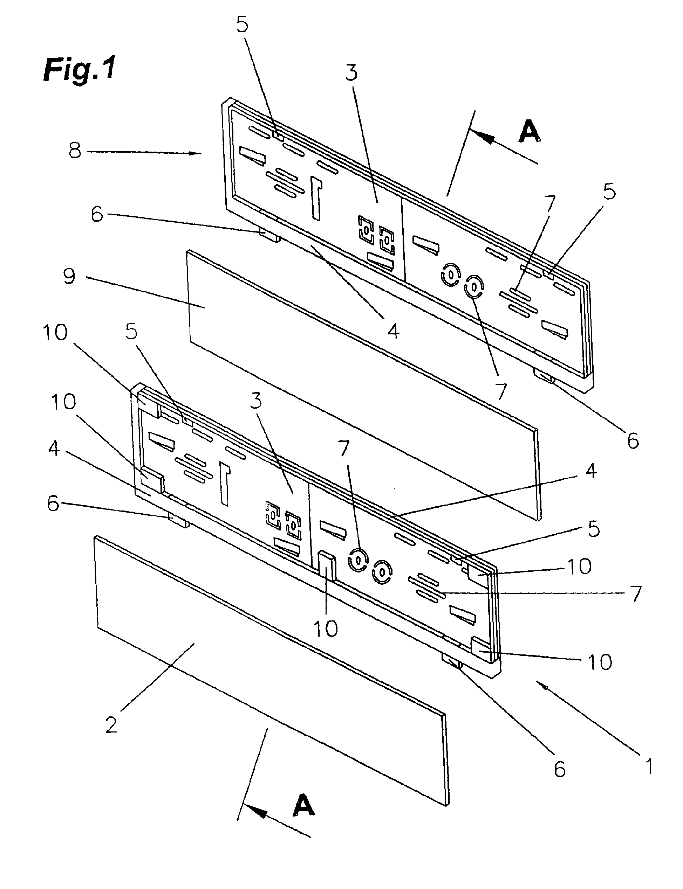

Gemäß der Fig. 1 dient zur Aufnahme einer, vorzugsweise temporär anbringbaren, Kennzeichentafel 2 an einem Kraftfahrzeug eine Kennzeichentafel-Halterung 1. Eine derartige Kennzeichentafel-Halterung 1 besteht aus einer die Unterseite der Kennzeichentafel 2 abstützenden, vorzugsweise Durchbrechungen 7 aufweisenden, Unterlagsplatte 3, die am Rand einen in Richtung der Kennzeichentafel 2 gerichteten Steg 4 aufweist. Der Steg 4 weist an mindestens einer Seite der Kennzeichentafel-Halterung 1 mindestens eine, wenigstens einen Teil der Oberseite des Kennzeichentafelrandes umgreifende, Lasche 5 auf. Im Steg 4 an der der Lasche 5 gegenüberliegenden Seite der Kennzeichentafel-Halterung 1 ist mindestens eine Durchbrechung für einen Schiebe-Haken-Verschluss 6 vorgesehen. Natürlich könnte der Schiebe-Haken-Verschluss 6 auch an zwei gegenüberliegenden Stegen 4 vorgesehen sein.

Zur Befestigung der Kennzeichentafel 2, die insbesondere ein Wechselkennzeichen ist, mit der Kennzeichentafel-Halterung 1 auf einem Kraftfahrzeug, ist eine weitere, zweite, vorzugsweise gleich ausgeführte, Kennzeichentafel-Halterung 8 vorgesehen, die am Fahrzeug, beispielsweise an der Stoßstange montiert ist. Diese Kennzeichentafel-Halterung 8 ist zur Aufnahme und Anordnung einer Metallplatte 9 vorgesehen. Die Metallplatte 9 weist vorzugsweise die gleiche Größe einer Kennzeichentafel 2 auf und ist vorzugsweise gleich der Kennzeichentafel 2 in ihrer Kennzeichentafel-Halterung 8 über Laschen 5 und/oder Schiebe-Hacken Verschlüsse 6 befestigt.

Um die erste Kennzeichentafel-Halterung 1 mit dem Wechselkennzeichen mit der zweiten Kennzeichentafel-Halterung 8 mit der Metallplatte 9 kraftschlüssig zu verbinden ist an der der Kennzeichentafel 2 zugewandten Seite der Unterlagsplatte 3 mindestens ein Magnet 10 angeordnet. Die Anordnung der Magnete 10 in der Kennzeichentafel-Halterung 1 kann durch Verklebung erfolgen.

Natürlich könnten der bzw. die Magneten 10 auch an der der Kennzeichentafel 2 abgewandten Seite der Unterlagsplatte 3 angeordnet sein.

Wie aufgezeigt, ist also die zweite Kennzeichentafel-Halterung 8 am Fahrzeug befestigt und die erste Kennzeichentafel-Halterung 1 mit der Kennzeichentafel 2 mittels des Magneten bzw. der Magneten 10 in der zweiten, am Fahrzeug befestigten, Kennzeichentafel-Halterung 8 befestigbar. Natürlich werden die Magnete 10 mit ihrer Magnetkraft so ausgewählt, dass die Sicherheit, auch verkehrstechnisch gesehen, gewährleistet ist.

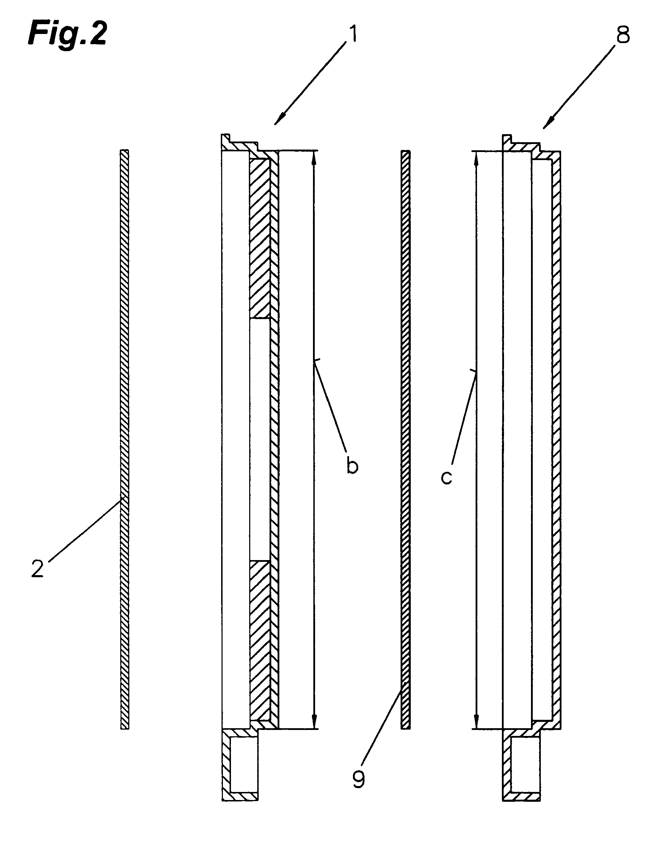

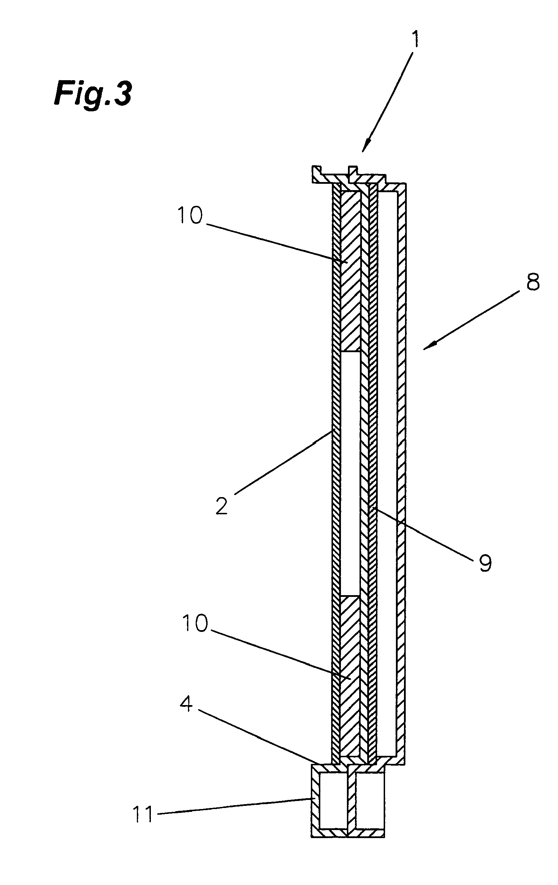

Ein Schnitt durch dieses Wechselkennzeichen - Befestigungssystems ist gemäß der Fig. 2 und 3 gezeigt. Um auch eine formschlüssige Verbindung zu erreichen, sind zur ineinander Stapelbarkeit der beiden Kennzeichentafel-Halterungen 1, 8 im Stegbereich die Außenabmessungen Länge und Breite b der Unterlagsplatte 3, vorzugsweise geringfügig, kleiner als die Innenabmessungen des für die Kennzeichentafel 2 bzw. der Metallplatte 9 aufnehmenden Raumes c.

In der Fig. 3 ist die ineinander Stapelbarkeit der Kennzeichentafel-Halterung 1 in der Kennzeichentafel-Halterung 8 gezeigt, wobei die kraftschlüssige Verbindung durch die Magnete 10 mit der Metallplatte 9 gegeben ist.
Natürlich könnten die Stege 4 mit breiten Stegflächen 11 - wie am unteren Rand gezeigt - ausgebildet sein, so dass die Stegflächen eine Umrandung der Kennzeichentafel 2 bilden.

Weiters ist es denkbar, dass die Kennzeichentafel-Halterung 1 mit einem Dekorrahmen als Tuningteil abgedeckt wird. Derartige Dekorrahmen werden im Tiefziehverfahren hergestellt, wodurch keine Ecken und Kanten gegeben sind. Es ist von gravierender Bedeutung, dass den in der EU eventuell in Kraft tretenden Richtlinien Rechnung getragen wird. Gemäß diesen Richtlinien müssen die letzten wegstehenden Anbauteile einen Mindestradius von 2,5 mm aufweisen, so dass keine Verletzungsgefahr gegeben ist. Durch die Herstellung im Tiefziehverfahren ist gewährleistet, dass keine Fußgänger unabsichtlich beim Vorbeigehen Schaden in irgendeiner Art und Weise erleiden. Ebenso gibt es keine scharfkantig wegstehenden Teile, die Menschen verletzen könnten.

Mit einem Dekorrahmen ist es also möglich, neben dem technischen Effekt der Sicherheit für knapp vorbeigehende Passanten oder an der Karosserie hantierendes Personal, auch den visuellen Eindruck einer Front- und Heckansicht eines Kraftfahrzeuges trendmäßig zu gestalten, so dass ein optischer Effekt erzielt wird, der zum Gesamt-Design beiträgt.

## Patentansprüche

1. Kennzeichentafel-Halterung, die zur Aufnahme einer, vorzugsweise temporär anbringbaren, Kennzeichentafel für ein Kraftfahrzeug, insbesondere für ein Wechselkennzeichen, dient, wobei die Kennzeichentafel-Halterung aus einer die Unterseite der Kennzeichentafel abstützenden, vorzugsweise Durchbrechungen aufweisenden, Unterlagsplatte besteht, die am Rand einen in Richtung der Kennzeichentafel gerichteten Steg aufweist und der Steg an mindestens einer Seite der Kennzeichentafel-Halterung mindestens eine, wenigstens einen Teil der Oberseite des Kennzeichentafelrandes umgreifende, Lasche aufweist und/oder im Steg, vorzugsweise an der der Lasche gegenüberliegenden Seite der Kennzeichentafel-Halterung, mindestens eine Durchbrechung für einen Schiebe-Haken-Verschluss vorgesehen ist, **dadurch gekennzeichnet, dass** eine weitere, zweite, vorzugsweise gleich ausgeführte, Kennzeichentafel-Halterung (8) vorgesehen ist, die zur Aufnahme und Anordnung einer Metallplatte (9), vorzugsweise gleicher Größe einer Kennzeichentafel (2), vorgesehen ist, wobei diese zweite Kennzeichentafel-Halterung (8) am Fahrzeug befestigt ist und dass an der Unterlagsplatte (3) der ersten Kennzeichentafel-Halterung (1) mindestens ein Magnet (10) angeordnet ist und dass die erste Kennzeichentafel-Halterung (1) mit der Kennzeichentafel (2) mittels des Magneten bzw. der Magneten (10) mit der zweiten, am Fahrzeug befestigten, Kennzeichentafel-Halterung (8) verbunden ist.

2. Kennzeichentafel-Halterung nach Anspruch 1, **dadurch gekennzeichnet, dass** der Magnet bzw. die Magneten (10) in der für die Aufnahme der Kennzeichentafel (2) vorgesehenen ersten Kennzeichentafel-Halterung (1) an der der Kennzeichentafel (2) zugewandten Seite der Unterlagsplatte (3) angeordnet ist.

3. Kennzeichentafel-Halterung nach Anspruch 1, **dadurch gekennzeichnet, dass** der Magnet bzw. die Magneten (10) an der für die Aufnahme der Kennzeichentafel (2) vorgesehenen ersten Kennzeichentafel-Halterung (1) an der der Kennzeichentafel (2) abgewandten Seite der Unterlagsplatte (3) angeordnet ist.

4. Kennzeichentafel-Halterung nach einem der Ansprüche 1 bis 3, **dadurch gekennzeichnet, dass** zur ineinander Stapelbarkeit der beiden Kennzeichentafel-Halterungen im Stegbereich die Außenabmessungen Länge und Breite (b) der Unterlagsplatte (3), vorzugsweise geringfügig, kleiner sind als die Innenabmessungen des für die Kennzeichentafel (2) aufnehmenden Raumes (r).

5. Kennzeichentafel-Halterung nach einem der Ansprüche 1 bis 4, **dadurch gekennzeichnet, dass** Stegflächen (11) eine Umrandung der Kennzeichentafel (2) bilden.
